(19) Europäisches Patentamt
European Patent Office
Office européen des brevets

(11) Publication number: **0 008 182**
**A1**

(12) **EUROPEAN PATENT APPLICATION**

(21) Application number: **79301510.8**

(51) Int. Cl.³: **A 01 G 25/09**

(22) Date of filing: **30.07.79**

(30) Priority: **31.07.78 GB 3176678**

(43) Date of publication of application: **20.02.80**
**Bulletin 80/4**

(84) Designated Contracting States: **AT BE CH DE FR GB IT LU NL SE**

(71) Applicant: **WIMPEY LABORATORIES LIMITED,**
**Beaconsfield Road, Hayes, Middlesex UB4 0LS (GB)**

(72) Inventor: **Harvey, Vernon Bryan William, 4 Stour Close, Little Canford Wimborne, Dorset (GB)**

(74) Representative: **Caro, William Egerton et al, J. MILLER & CO. Lincoln House 296-302 High Holborn, London WC1V 7JH (GB)**

(54) **Coupling unit, in particular for an irrigation apparatus.**

(57) A coupling unit, for example, for automatic irrigation apparatus, comprises a probe (32) arranged to connect within a mouth (33) of a hydrant to receive a water supply from the supply line (B) connected to the hydrant. The probe (32) is mounted on a chassis (14). The chassis has two wheels (10) by means of which it rides on an upper surface of the supply line (B) and guide wheels (12) which engage the side to the supply line (B) so that the coupling unit will follow the supply line (B). The chassis (14) is also supported from a steering head (28) and a flexible coupling including a bearing (29) and a jack (31), permits limited relative movement between the probe (32) and the steering head (28) to accommodate misalignment of the probe (32) with the mouth (33) of the hydrant. In an alternative embodiment the probe (32) is flexibly mounted on the chassis (14) which is fixed. In both embodiments a sensing mechanism (60) enables the probe (32) to be tilted relative to the hydrant.

EP 0 008 182 A1

TITLE MODIFIED
see front page



"COUPLING UNIT"

This invention relates to coupling units and in particular, although not so restricted, to coupling units for irrigation apparatus.

According to one aspect of the present invention there is provided a coupling unit comprising: a probe arranged to be located from a supply line; a chassis on which the probe is mounted; wheeled guide means carried by the chassis for urging the coupling unit to follow the supply line; support means for supporting the chassis; flexible coupling means permitting limited movement of the probe relative to the support means to accommodate misalignment of the probe with the mouth of the hydrant; and a tilting mechanism for tilting the probe to correct relative tilt between the probe and the hydrant.

The tilting mechanism may comprise sensing means for sensing relative tilt between the hydrant and the probe, transmitting means for transmitting the relative tilt to the probe, and means for causing the probe to align with the hydrant to correct for said relative tilt. The transmitting means may comprise a mechanical linkage.

In the preferred embodiment the wheeled guide means includes at least one pair of guide wheels between which the supply line is engaged, and a further wheel arranged to run on an upper surface of the supply line.

The support means may include a steering head.

Preferably the coupling unit includes locking means for permitting said limited relative movement of the probe relative to the support means only when the probe is about to be introduced into the mouth of the hydrant.

The coupling unit may comprise drive means for moving the probe towards and away from the mouth of the hydrant, the probe carrying roller means arranged to engage ramp surface means on the hydrant when the probe is misaligned with the mouth of the hydrant prior to the probe being located therein, the roller means, as the probe is moved towards the mouth of the hydrant, running over the ramp surface means causing the probe to move relative to support means until the probe is aligned with the mouth of the hydrant.

In one embodiment the probe is connected to the chassis by means of a flexible coupling.

In an alternative embodiment the probe is fixed to the chassis which is capable of limited movement relative to the support means.

Preferably the coupling unit includes flow control means for varying the flow of liquid through the probe as a function of liquid pressure downstream or upstream of the probe.

According to a further aspect of the present invention there is provided an irrigation apparatus having a coupling unit as recited above.

The invention is illustrated, merely by way of example, in the accompanying drawings, in which:-

Figure 1 is a schematic illustration of one embodiment of an irrigation apparatus including a coupling unit according to the present invention;

Figure 2 shows a typical arrangement of a water supply pipe for use with the irrigation apparatus of Figure 1;

Figures 3 and 4 illustrate the use of the irrigation apparatus of Figure 1 to irrigate a substantially square area;

Figure 5 illustrates the use of the irrigation apparatus of Figure 1 to irrigate a substantially rectangular area;

Figure 6 illustrates the use of the irrigation apparatus of Figure 1 to irrigate a quadrant;

Figure 7 illustrates schematically the manner in which the irrigation apparatus of Figure 1 performs a 90° turn;

Figure 8 is a schematic side view of one embodiment of a coupling unit according to the present invention;

Figure 9 is a view of part of the coupling unit of Figure 8 looking in the direction of an arrow Z;

Figure 10 is a schematic view, partially in section, of a probe of the coupling unit of Figure 8;

Figure 11 is a section taken on the line 11-11 of Figure 10;

Figure 12 is a view of the probe of Figure 10 looking in the direction of an arrow Z' in Figure 10;

Figure 13 is a sectional view illustrating a hydrant to which the probe of Figure 10 is coupled;

Figure 14 is an end view of the hydrant of Figure 13;

Figure 15 is a perspective view of a sensing mechanism of the coupling unit of Figure 8;

Figure 16 is a schematic diagram of the circuitry of the irrigation apparatus of Figure 1;

Figure 17 is a schematic illustration of another embodiment of an irrigation apparatus including a coupling unit according to the present invention;

Figure 18 is a schematic view of another embodiment of a coupling unit according to the present invention;

Figure 19 shows part of the coupling unit of Figure 18 in greater detail;

Figure 20 is a schematic view of a modification of the probe of Figure 10; and

Figure 21 illustrates a modification of the arrangement shown in Figure 13.

In the following description the expressions "upper", "lower", "vertical", "lateral" etc. refer to the directions as seen in the drawings. Throughout the drawings like parts have been designated by the same reference numerals.

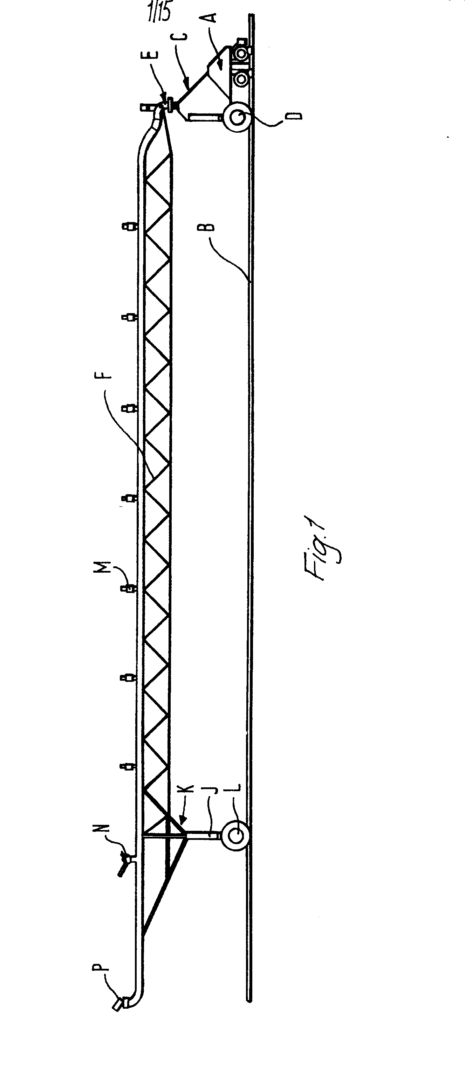

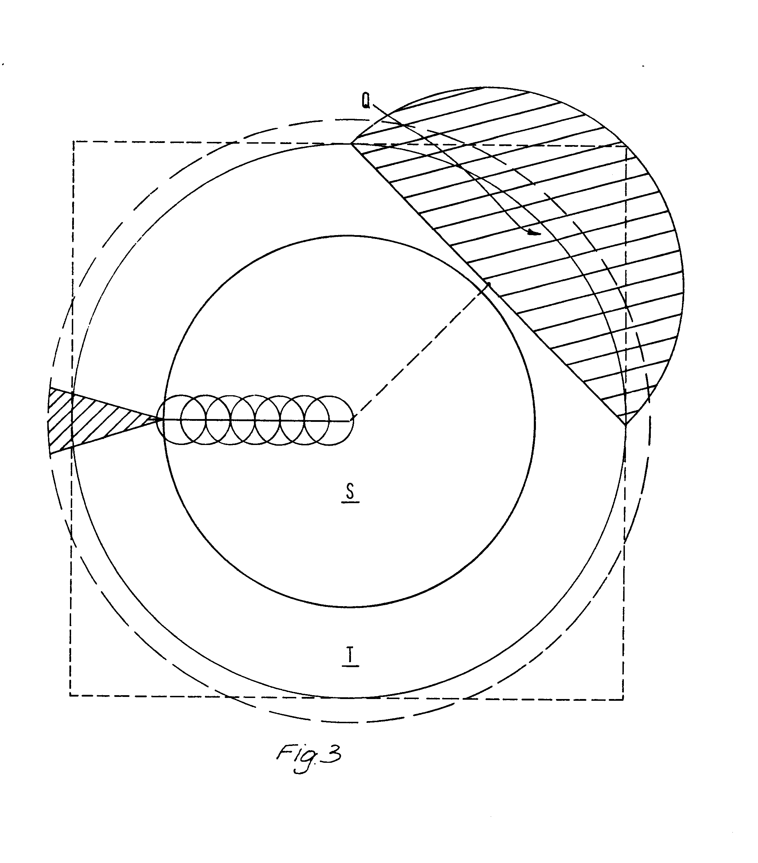

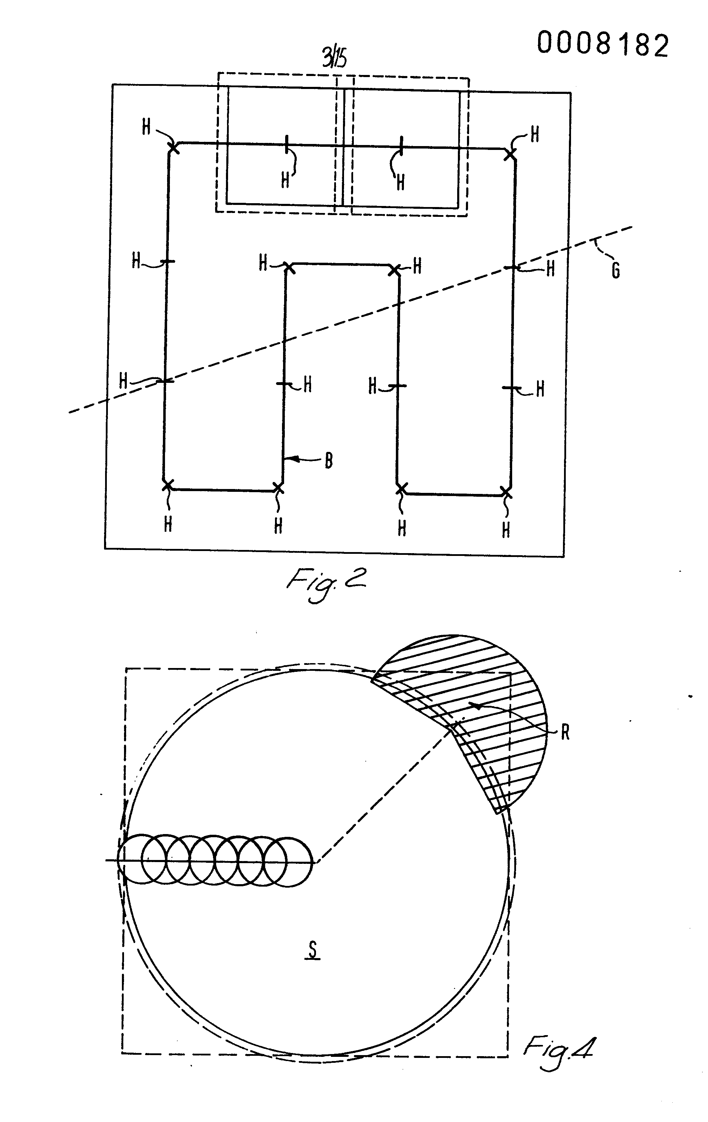

Referring first to Figure 1, there is illustrated one embodiment of an irrigation apparatus having a drive or forward unit C housing control equipment and a propulsion system. Coupled to the forward unit C is a hydrant coupling unit A according to the present invention which travels on top of and is guided by a water supply pipe B. The supply pipe has a plurality of hydrants (not shown in Figure 1) spaced at predetermined intervals along its length. When the irrigation apparatus arrives at one of these hydrants it is automatically coupled thereto to receive water under pressure from the supply pipe by the coupling unit A. The forward unit C has a pair of main drive wheels D which are driven by the propulsion system and which run on the ground and a pivot mechanism E which is connected to one end of an irrigation boom F. The pivot mechanism E is such that the weight of one end of the boom F is supported by the forward unit C so that the boom can rotate around the forward unit. Passing through the pivot mechanism E from the forward unit C to the boom F are hydraulic and/or pneumatic supply lines, water supply lines and electrical supply lines.

The other end of the boom F is supported from the ground by a wheel unit K consisting of a pair of legs J each of which carries a wheel L. The wheels L are of a similar construction to the wheels D. Drive means (not shown) e.g. an hydraulic motor, is provided on the wheel unit to drive at least one of the wheels L. The wheel unit K is capable of rotating through $90^{o}$ between a position in which the wheels L are aligned with the length direction of the boom F when the irrigation apparatus is being moved bodily along the pipe B e.g. between hydrants, and a position in which the wheels L are at $90^{o}$ to the length direction of the boom F when the boom is rotated around the forward unit C.

The wheel unit K carries a pipe detector (not shown) to stop rotation of the boom F with its axis aligned with the pipe prior to moving the irrigation apparatus bodily, e.g. between hydrants.

The boom F carries a plurality of rotating sprinklers M each irrigating a substantially circular area, a first rotating sprinkler or jet N and a second rotating sprinkler or jet P at the very end of the boom remote from the forward unit C. Each sprinkler M may be a conventional sprinkler which performs full or part circle rotation. Each of the jets N, P may be a conventional large sprinkler which is set to operate on a part circle. The sprinklers M and the jets N, P are controlled by individual valves to enable irrigation of a desired area.

The irrigation apparatus uses an internal combustion or compression-ignition engine as its basic power source, this engine being used to produce electrical, pneumatic and/or hydraulic power which drives other parts of the apparatus including the propulsion system. However, the irrigation apparatus could have other types of power source e.g. an electric motor or a water turbine driven by water under pressure from the pipe B.

The irrigation apparatus described above may be operated in a totally automatic mode in which it is controlled by a programme to irrigate a given area, the programme reducing or preventing both underwatering and overwatering of the area. It can also be arranged to become inoperative if the water pressure in the pipe B falls below a predetermined value. The irrigation apparatus follows the pipe B laid in a desired path which may be a closed or open path. After one area has been irrigated the irrigation apparatus automatically disconnects from the respective hydrant, moves to the next hydrant and couples thereto and then proceeds to irrigate the adjacent area.

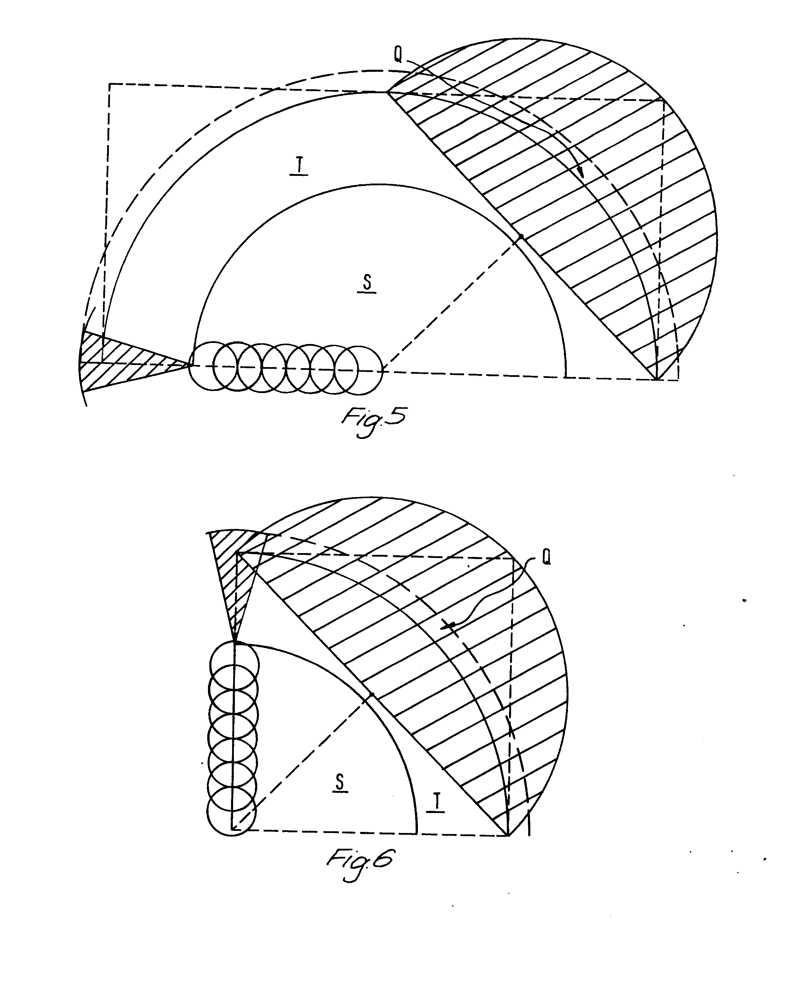

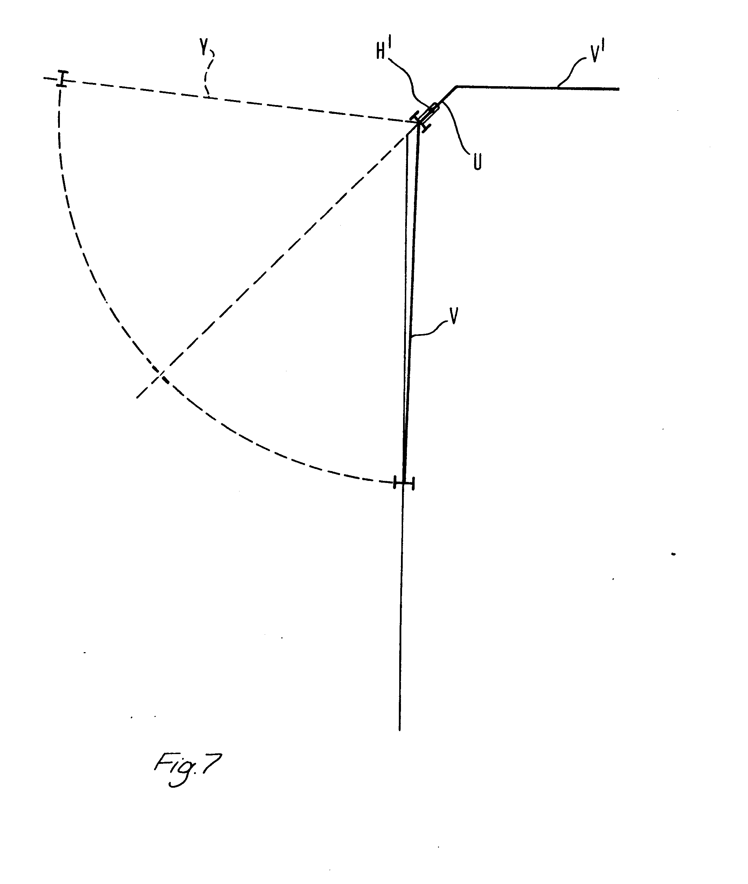

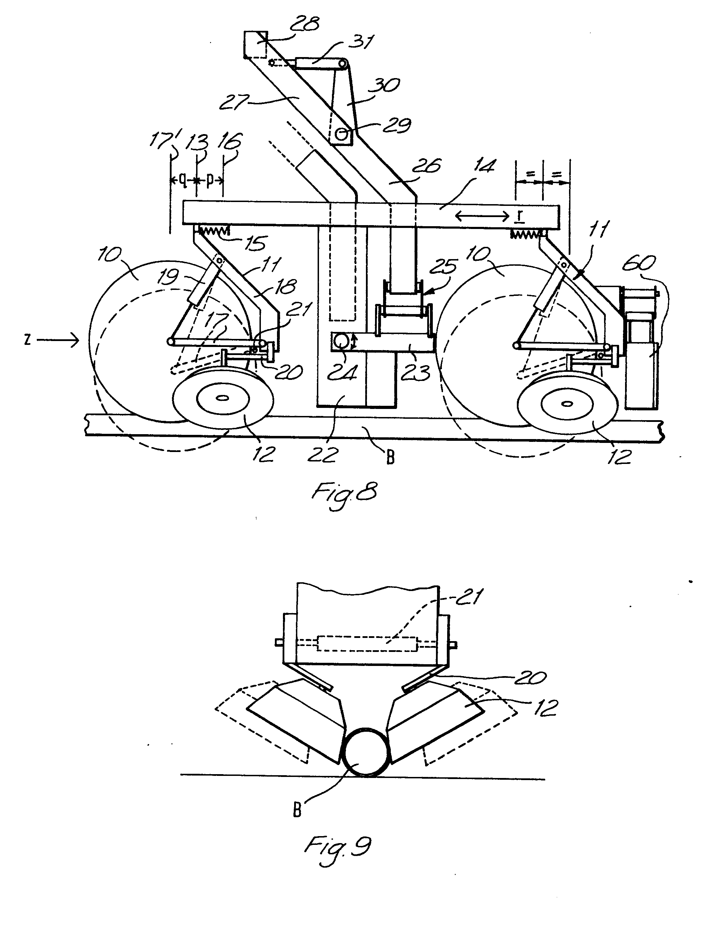

Figure 2 illustrates a typical arrangement of the pipe B for a field. It will be seen that the pipe B is in the form of a ring main which itself is supplied with water under pressure from a main G. Along the pipe B there are hydrants H. The pipe B not only provides a water supply to the irrigation apparatus but also guides its movement. In Figure 2 the areas outlined by dotted lines indicate the areas irrigated by the irrigation apparatus from each hydrant. It will be seen that each of these areas is substantially square.

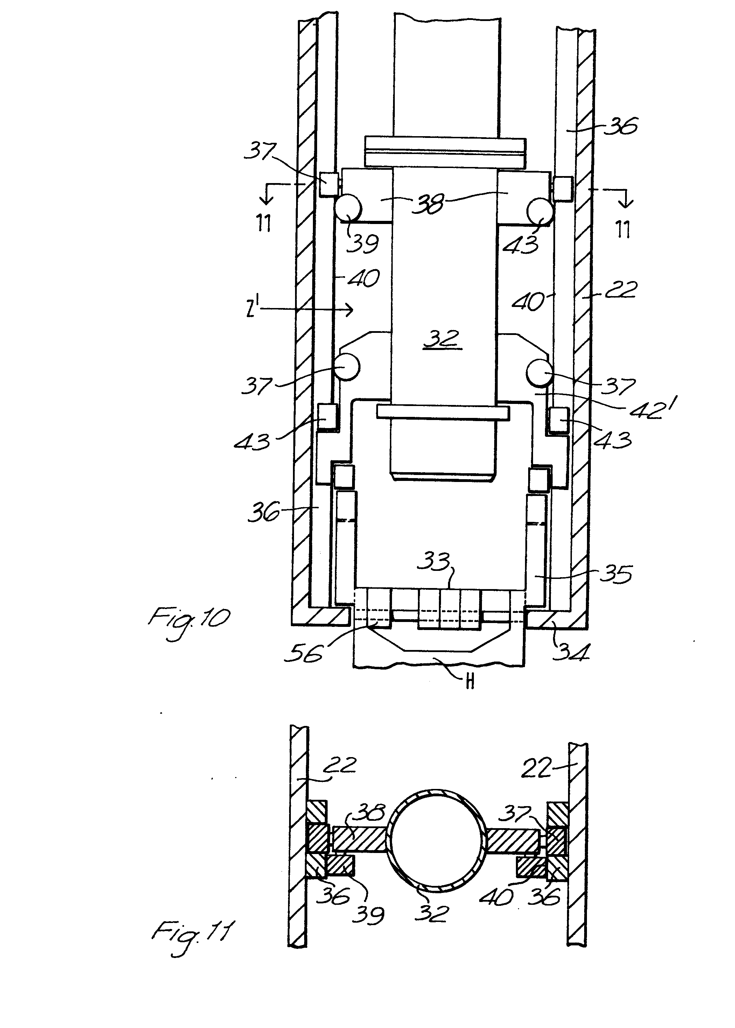

Figure 3 illustrates an irrigation pattern covered by the irrigation apparatus from one hydrant. The inner circle S is covered by means of the sprinklers M and the outer circle T by the net N, the jet P being shut-off, and thus the conventional circular irrigation pattern is produced. However, the boom F is stopped at each corner, i.e. after the boom has rotated through substantially 90°, of the square area to be irrigated, the sprinklers M and the jet N are shut off and the jet P is switched on thus irrigating an area Q and producing an acceptable, in irrigation terms, substantially square irrigation pattern.

An alternative irrigation pattern is shown in Figure 4 where only the inner circle S is covered by the sprinkers M and the boom F is stopped at each corner of the square area as before and the jet N is switched on to irrigate an area R. Thus in this alternative the irrigation pattern is substantially square but is smaller in area than the irrigation pattern illustrated in Figure 3.

Other irrigation patterns can be produced. For example, as shown in Figure 5, by reciprocating the boom F through 180$^{o}$, instead of rotating it through 360$^{o}$, and by suitably controlling the operation of the sprinklers M and the jet N or the jets N, P, a substantially rectangular irrigation pattern can be obtained. An irrigation pattern covering a quadrant can similarly be obtained by reciprocating the boom through substantially 90$^{o}$ as shown in Figure 6.

The movement of the boom F and the operation of the sprinklers M and the jets N, P to produce the desired irrigation patterns are controlled by the control equipment housed in the forward unit C. The irrigation pattern used in the irrigation of, for example, a field, is dependent upon the actual shape of the field and the layout of the pipe B. Moreover, it may be desirable to irrigate different areas with different quantities of water, for example, in the case of several crops in the area to be irrigated, this too may be controlled by the forward unit C.

The control equipment may be internally programmed so that a given area, for example a field, is irrigated in the desired manner. Alternatively control cams, for example, may be provided at each hydrant, each control cam determining the irrigation pattern etc. required at the respective hydrant. The control equipment not only controls the operation of the sprinklers M and the jets N, P to produce predetermined irrigation patterns, but also controls movement of the irrigation apparatus between hydrants. The speed of rotation of the boom F may be controlled electronically by a speed sensor on the wheels L. Thus, for example, the boom F may be rotated at a control speed irrespective of whether the ground to be irrigated is level or not.

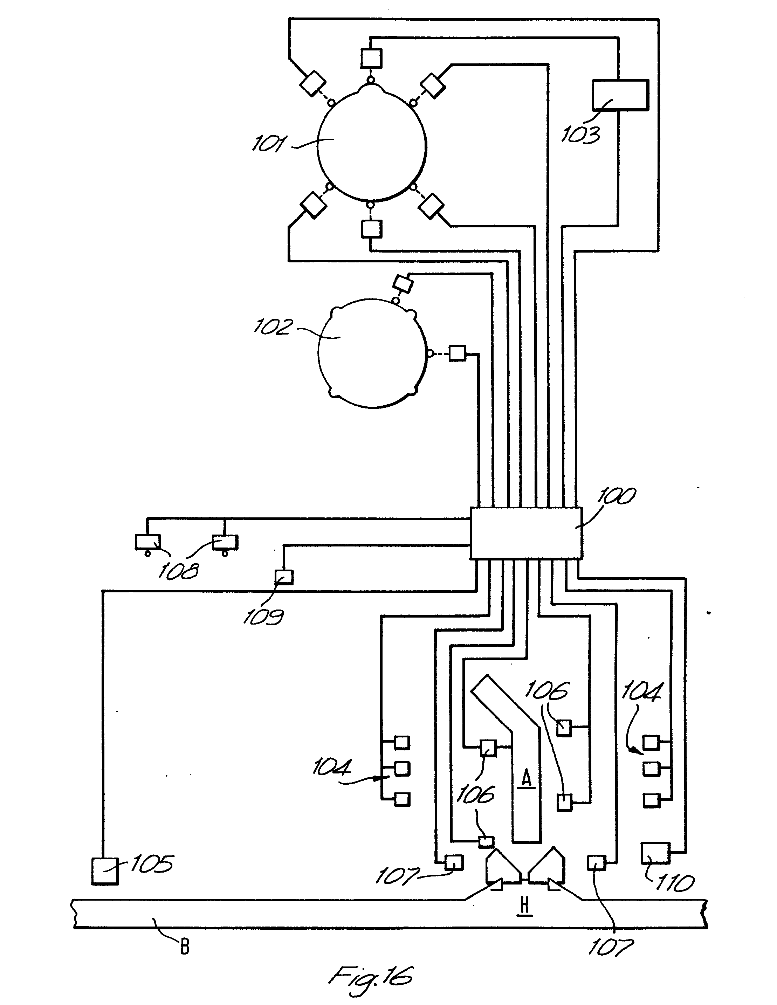

Figure 16 illustrates schematically one embodiment of electric control circuitry for the irrigation apparatus of Figure 1. A control box 100 receives programme instruction signals from cam selector plates 101, 102 which form part of the pivot mechanism E. The cam selector plates 101, 102 provide, in particular, to the control box signals representative of the position of the boom F relative to the forward unit C and by means of a counter 103, a signal representative of the number of revolutions performed by the boom F. The control box 100 also receives inputs from a plurality of switches 104 activated by a control cam or control cams on the hydrant to determine a predetermined irrigation pattern etc. required in the region of that hydrant. The control box also receives a signal from a pipe detector 105, from sensors 106 which are operative as the coupling unit A is coupled to the hydrant, from control switches 107, 110 which detect the approach of a hydrant so that the control box causes the irrigation apparatus to slow down and which detects any tilting of the hydrant, switches 108 which detect the position of the wheels D, L, and a switch 109 which produces signals representative of operation of the sprinklers M and jets N, P. The control box 100 produces output signals (not shown) which are fed to control valves, the propulsion system etc. of the irrigation apparatus to control its operation.

The irrigation apparatus described above operates as follows. The apparatus follows the pipe B, arrives at a hydrant which is detected by the control switches 107, 110 and automatically connects thereto by means of the hydrant coupling unit A. The wheel unit K rotates until the wheels L are at 90° to the length direction of the boom F and as soon as water pressure is available the boom rotates about the forward unit C and irrigates a desired area with an irrigation pattern determined by the control cam or cams on the hydrant or a programme stored within the forward unit. When the boom has completed the required number of revolutions detected by the counter 103 the boom is stopped in line with the pipe detected by the pipe detector 105 and the wheel unit K rotates through 90° so that the wheels L are astride the pipe B and are parallel to the length direction of the boom. The coupling unit A disconnects from the hydrant and the irrigation apparatus proceeds to the next hydrant.

To perform a 90° turn (Figure 7), the pipe B is provided with a relatively short pipe section U between two pipe sections V, V' which are at 90° to one another. The pipe section U joins the pipe sections V, V' and is at 45° to each. A hydrant H' is provided on the pipe section U. In operation, the irrigation apparatus is moved along the pipe section B and the forward unit C coupled to the hydrant H' with the length direction of the boom F substantially, but not exactly, parallel to the pipe section V with the forward unit C substantially at 45° to the boom F. The cam selector plates 101, 102 thus cause the boom F then to perform a predetermined number of revolutions to irrigate the area around the hydrant H' and to stop the boom F in a position Y. Thus the length direction of the boom is substantially, but not exactly, parallel to the pipe section V'. Thus the irrigation apparatus can move along the pipe section V' until it reaches the next hydrant. It will be appreciated that, in this manner, the irrigation apparatus has performed a $90^{\circ}$ turn. It has been found that the irrigation apparatus described above can, in this manner negotiate extremely tight $90^{\circ}$ corners in the pipe B.

The irrigation apparatus illustrated in Figure 1 can, as already described, be used in an automatic mode in which it follows the pipe B from hydrant to hydrant and irrigates a given area at each in accordance with a predetermined programme. It will be appreciated that the areas irrigated at adjacent hydrants may overlap. Alternatively, the irrigation apparatus may be used in a manual mode for movement off the pipe B. To this end, the irrigation apparatus may be manually controlled in one of two ways neither of which is illustrated. The first way is to provide a driving position at or adjacent the forward unit C with a seat, steering wheel and manually operate control console. The second way is to provide a handle adjacent the forward unit C for steering the wheels D and a manually operable control console 12 for use by an operator walking alongside the irrigation apparatus. In either case the manually operable control console is used to steer the wheels L to enable the irrigation apparatus to be manoevered in confined spaces especially when it is desired to change the direction of travel of the irrigation apparatus.

Referring now to Figure 8, the coupling unit A according to the present invention is shown in greater detail. The coupling unit A has two pivoted load carrying wheels 10 mounted in trailing configuration and arranged to travel on the upper surface of the pipe B. Each wheel 10 is mounted for rotation in a respective wheel support frame 11 which carries two guide wheels 12 independently spring biased by means (not shown) to contact the sides of the pipe B. Each of the frames 11 is mounted for pivotal movement about a vertical axis 13 on a chassis 14. A spring 15, connected between the chassis 14 and each frame 11, biases the latter toward a central position to provide stability and to urge the coupling unit to travel in a straight line unless it is negotiating a bend in the pipe B. The contact point (indicated by line 16) of the guide wheels 12 on each frame 11 with the pipe B is in advance of the axis 13 by a distance p which is equal to a distance q by which the axis (indicated by line 17) of rotation of the respective wheel 10 is in retard of the axis 13. This also increases stability and facilities guiding of the guide wheels 12 on the pipe B.

Each wheel 10 is mounted for rotation at one end of a strut 17 forming part of the frame 11. The other end of the strut 17 is pivotally connected to a frame part 18 which itself is pivotally mounted on the chassis 14. A jack 19 is connected at one end to the strut 17 and at the other end to the frame part 18. Thus the wheel 10 may be raised clear of the pipe B by means of the jack 19. Each guide wheel 12 is mounted on a strut 20 connected to the frame part 18. A jack 21 (best seen in Figure 9) is connected to the struts 20 to move the guide wheel 12 clear of the pipe B and the wheel 10 as shown in dotted lines in Figure 9. The wheels 10, 12 are, by means of the jacks 19, 21 moved clear of the pipe B when it is desired to move the irrigation apparatus away from the pipe B.

A probe housing 22 is fixed to the chassis 14. A strut 23 is pivotally connected at one end by a bearing 24 to the housing 22 and is connected at its other end by a probe tilt slave linkage 25 to a support strut 26. Thus the chassis 14 is capable of pivoting in the direction indicated by an arrow in Figure 8 about the bearing 24 and also about the linkage 25. A steering head arm 27 is fixed at one end to a steering head 28 forming part of the forward unit C and is mounted for pivotal movement about a bearing 29 on the strut 26. The strut 26 carries a lever 30 the free end of which is connected to the arm 27 by a locking device 31 which may be an hydraulic or pneumatic jack or an electrically operated unit. The locking device 31, when locked, maintains the bearing 29 vertically above the bearing 24 and, when unlocked, allows the strut 26 to pivot about the bearing 29 relative to the arm 27 so that limited movement of the chassis 14 in the direction of an arrow r relative to the steering head 28 is possible.

The relationship between the axis 13 of the leading guide wheels 12 and the steering head 28 provides a mechanical servo effect which greatly reduces loads imposed on the guide wheels 12 when negotiating sharp bends in the pipe B. The fact that the chassis is capable of pivoting about the bearing 24 allows the wheels 10 to ride over obstacles along the pipe B such as, for example, couplings or joints. Moreover, the ability of the chassis 14 to move to a limited extent in the direction of the arrow r enables misalignment of a probe 32 (Figures 10 to 12) located within the housing 22 with a hydrant H to be accommodated without having to move the whole of the irrigation apparatus.

Referring now to Figure 10, at the lower end of the housing 22, lugs 34 each engage beneath a pair of side plates 35 located on each side of a mouth 33 of the hydrant H to locate the probe laterally and to prevent the probe and hydrant from separating when water flows from the latter to the former. On the interior of the housing 22 there are two guide tracks 36 (best seen in Figure 11) in each of which runs a pair of spaced apart rollers 37. The rollers 37 at the upper end of the housing 22 are mounted on respective arms 38 which are fixed to the probe 32. Each arm 38 also carries a further roller 39 which runs on a wall 40 of the track 36 to guide the probe laterally. The rollers 37 at the lower end of the housing 22 are mounted on a support member 42' which carries further rollers 43 also for guiding the probe 32 laterally. A jack 41 (Figure 12) which may be pneumatic or hydraulic is connected between the support member 42 fixed to the probe 32 and the housing 22 to raise and lower the probe within the housing. A roller 44 is mounted on the support member 42 on each side of the probe 32 to engage a ramp surface 45 on one or other of the side plates 35 of each pair as the probe is lowered. When each roller 44 is positioned in a slot 46 between the respective pair of side plates 35 the probe is correctly located within the mouth 33 of the hydrant.

In operation the irrigation apparatus is stopped with the probe 32 substantially above the hydrant and the probe is lowered towards the mouth of the hydrant by the jack 41 with the locking device 31 unlocked. If there is any misalignment between the probe 32 and the mouth 33 of the hydrant, the rollers 44 will engage ramp surfaces 45 on the respective pairs of side plates 35 and as the probe is lowered further will roll towards the respective slots 46 at the same time moving the chassis 14 in the direction of arrow r. Thus the probe will become precisely aligned with the mouth of the hydrant. When this has occurred the locking device is locked to prevent further movement of the chassis 14.

The construction of the hydrant is illustrated in Figure 13. In the mouth 33 of the hydrant is a valve plate 47 which is urged into closing contact with a seat 48 by a spring 49. The valve plate 47 has a central valve stem 50 fixed to a flow ring 51 against which bears the upper end of the spring 49. The lower end of the spring 49 bears against a ledge 52 of a housing 53 of the hydrant. As the probe is lowered into the mouth 33 of the hydrant, it engages the flow ring 51 so as to move the valve plate away from its seat 48 thereby allowing water to pass from the pipe B to the probe.

The flow ring 51 has a plurality, e.g. 4, radial vanes 54 which act as flow guides, as guides for movement of the valve stem 50 and to prevent ingress of debris into the mouth 33.

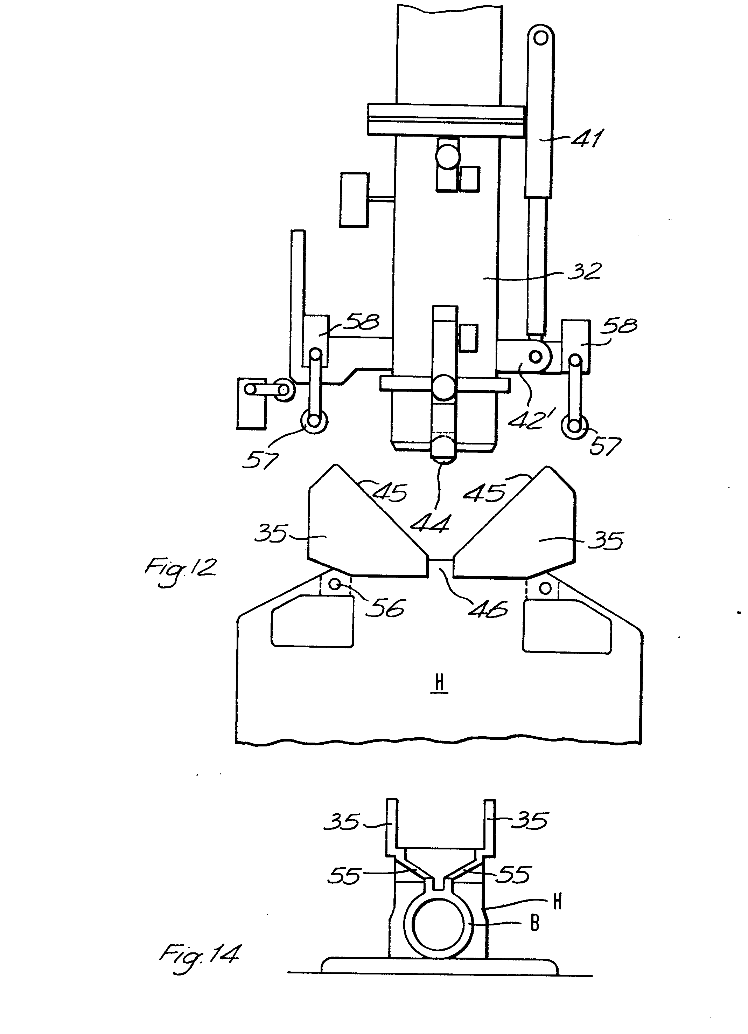

The housing 53 of the hydrant has ramp surfaces 55 to assist passage of the wheels 10 over the hydrant. The wheels 10 ride over the surfaces 55 as best seen in Figure 14. Adjacent the surfaces 55 switch or valve operating cams 56 (Figure 10) may be provided. These cams cooperate with rollers 57 connected to operate respective programme control switches 58 mounted on the support member 42 as the probe 32 enters the mouth 33 of the hydrant to select the cycle operation of the irrigation apparatus appropriate to that hydrant.

A non-return plate valve 58 is located at the upper end of the probe to reduce the amount of spillage of water when the probe is withdrawn from the hydrant. When connected to the hydrant the pressure of water from the hydrant maintains the valve 58 open but the valve 58 will close as the probe 32 is withdrawn from the hydrant and the flow of water within the probe ceases.

The water within the probe 32 may be maintained at an optimum desired pressure regardless of the pressure of water within the pipe B, assuming that the pressure of water within the pipe B is higher than the desired pressure. This is achieved by a pressure sensing device (not shown) which adjusts the jack 41 and the position of the probe 32, thus varying the position of the valve plate 47 relative to its seat 48. The pressure sensing device may be located to sense water pressure at a desired point or points. Consequently the position of the probe 32 relative to the mouth 33 of the hydrant controls the flow of water through the probe.

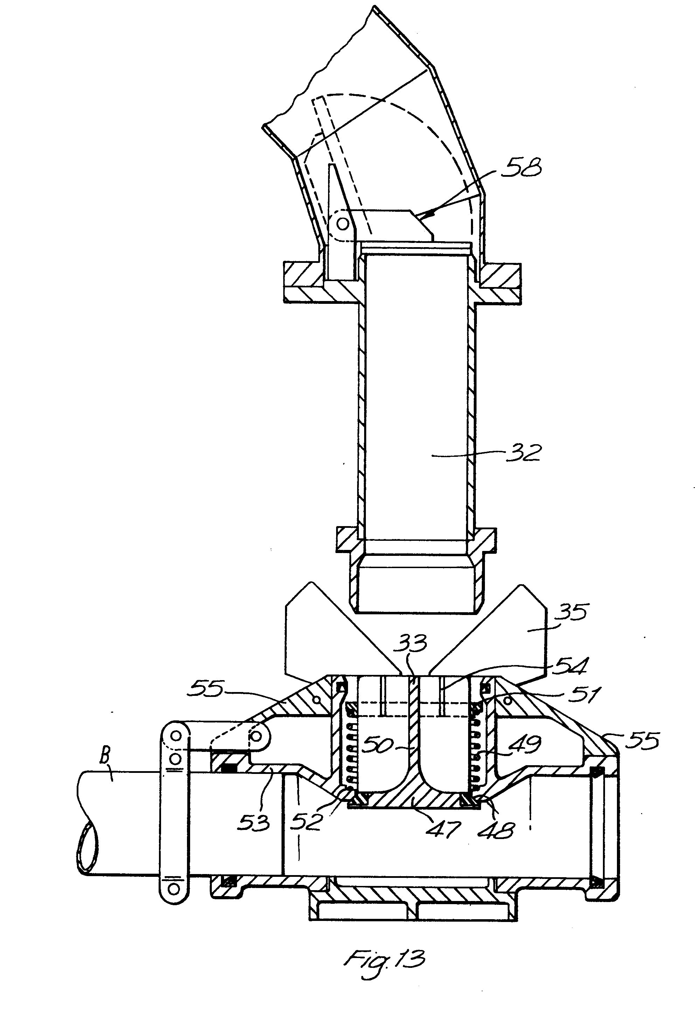

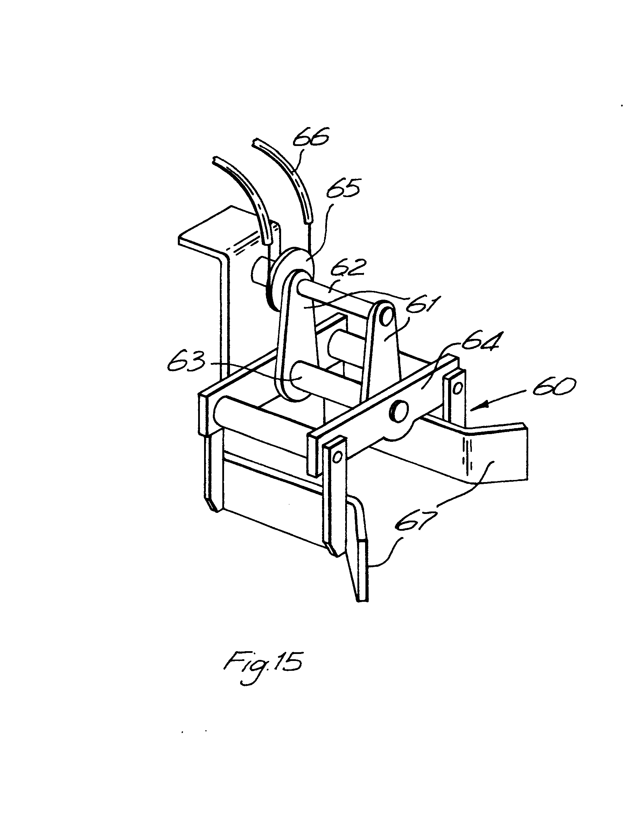

Figure 15 is a perspective view of a sensing machanism 60 for tilting the probe 32 to align it with a hydrant when the latter is not vertical. The sensing mechanism 60 comprises two link arms 61 which rotate about a fixed shaft 62. The link arms are connected at their lower ends by a shaft 63 whose ends are mounted in bearings in a sub-frame 64. A pulley wheel 65 is rigidly attached to one of the link arms 61 and operates a flexible cable 66 to transmit tilting movement of the sensing mechanism 60 to a slave unit (not shown) connected, for example, at the linkage 25 to cause the probe to perform a corresponding tilting movement. A pair of sensing plates 67 are mounted for pivotal movement on the sub-frame 64 and are biased towards each other by a spring (not shown). When not in contact with the hydrant the sensing plates 67 are each at an angle of about $10^{o}$ to the vertical. On contacting a hydrant the sensing plates move outwardly to a vertical position and, at the same time, operate a switch (not shown) which slows down the rate of travel of the irrigation apparatus having sensed the proximity of the hydrant. The sensing plates sense the degree of relative tilt between the hydrant and the probe and transmits this relative tilt to the slave unit so that the probe tilts to the correct angle for entry into the hydrant.

The coupling unit A described above operates as follows. On approach to the hydrant the sensing plates 67 contact the hydrant H and operate the switch which slows down the rate of travel of the irrigation apparatus and at the same time the probe is tilted, if necessary, so that there is zero relative tilt between the probe and the hydrant. Thus prior to the probe arriving at a position above the hydrant, it is at the correct angle for entry thereinto. Travel of the irrigation apparatus is stopped with the probe substantially above the mouth 33 of the hydrant upon actuation of a switch (not shown) carried by the housing 22 by the hydrant. When the irrigation apparatus is stopped, the probe is above the mouth of the hydrant within limits determined by the side plates 35. The wheels D are locked to prevent further travel of the irrigation apparatus. The jack 41 lowers the probe and when the rollers 44 are just above the ramp surfaces 45 of the side plates 35 the locking device 31 is unlocked permitting the chassis to move in the direction of the arrow r as the rollers 44 run over the ramp surfaces to reach the respective slots 46. Further lowering of the probe causes the valve plate 47 to lift from its seat 48 and water to flow from the hydrant into the probe and thence to the sprinklers M and jets N, P. At the same time the locking device 31 will lock to prevent relative movement in the direction of arrow r between the chassis 14 and the hydrant.

After a predetermined time or quantity of water has flowed through the probe, the jack 41 raises the probe and the irrigation apparatus proceeds to the next hydrant. The initial travel of the irrigation apparatus is at a relatively reduced speed until the trailing wheel 10 has passed over the hydrant. At the same time the slave unit and linkage 25 return to a datum position.

The advantage of irrigation apparatus of the type described above is that by rotating the boom F about the forward unit C at a constant speed the total application of water to a given area is gradually built up. For example, if water equivalent to precipitation of 1.5 mm is applied upon each revolution or pass of the boom, the soil will have up to 30 minutes to take up that water until the boom next applies water. This type of irrigation is very acceptable to even the most delicate soils and crops thrive with a slow build up of water through a plurality of gentle applications. Known systems which apply water equivalent to precipitation of from 12.5 mm upwards to 30 mm each pass have been found to damage soil structure and crops.

The facility of being able to apply a given quantity of water to a given area in a given time makes the irrigation apparatus particularly suitable to the application of fertiliser especially if the fertiliser is applied to a previously watered crop. Thus fertiliser can be metered into the water sprayed from the boom on any desired revolution of the boom, at any hydrant, at any time. The supply of fertiliser is preferably carried by the irrigation apparatus and would be metered by any known metering system.

It will be appreciated that the coupling unit A can be used with various types of irrigation apparatus. Thus, for example, the boom F may be dispensed with and a sprinkler or jet or centre rotatable boom mounted directly on the forward unit C either on or in place of, the pivot mechanism E.

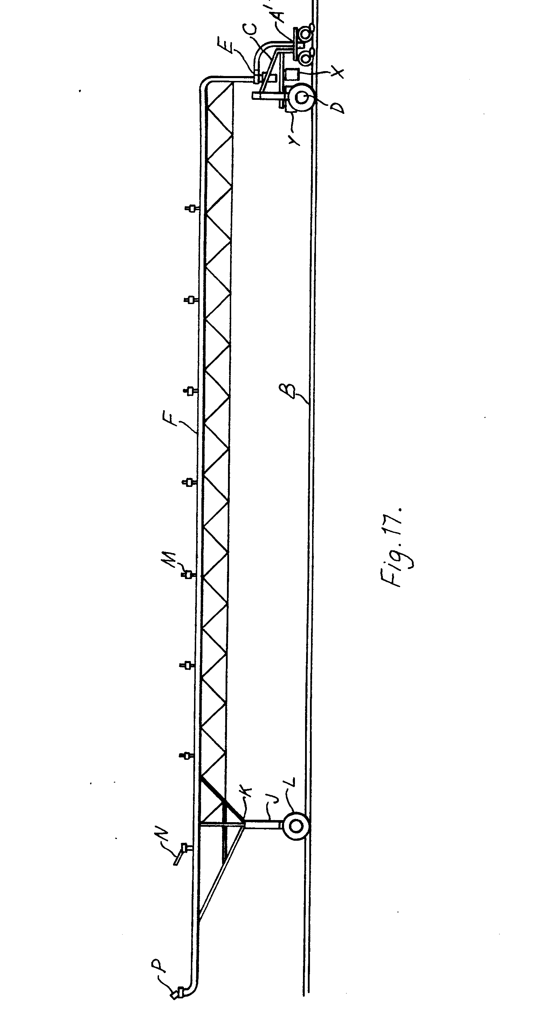

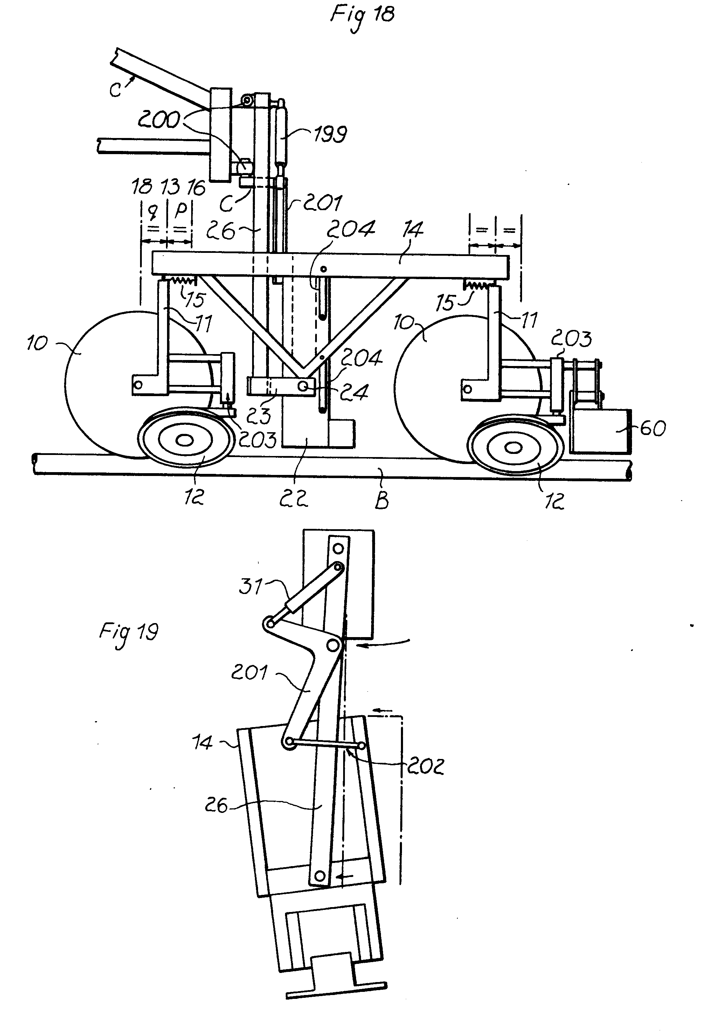

Referring now to Figure 17, there is illustrated another embodiment of an irrigation apparatus which is similar to the irrigation apparatus of Figure 1 except that a coupling unit A' according to the present invention is connected by spherical bearings 200 (Figure 18) to the forward unit C which carries circuitry X and a diesel engine/hydraulic power unit Y.

The coupling unit A' shown in Figure 18 is similar to that shown in Figure 8. The bearings 200 provide the strut 26 with the facility to tilt as shown in Figure 19 and to steer. A bell-crank lever 201 is pivotally mounted on the strut 26, one end of which is connected by a locking/tilting device 199 to the strut 26 and the other end of which is connected _via_ a strut 202 to the chassis 14. The locking/tilting device 199 is controlled by the sensing mechanism 60. Thus when the bell-crank lever 201 is pivoted, the strut 26 moves laterally, and the strut 202 ensures that the chassis 14 tilts correspondingly in the lateral direction.

The guide wheels 12 are mounted on the frame 11 _via_ rubber springs 203 to provide the required contact pressure with the pipe B. The guide wheels 12 and the rubber springs 203 can be pivoted manually out of contact with the pipe so that the apparatus can travel out of contact with the pipe by means of the wheels 10.

The probe housing 22 is mounted from and capable of longitudinal movement relative to the chassis 14 by means of flexible linkages 204 which may be made, for example, of rubber. The chassis 14 is thus, in this embodiment, incapable of movement relative to the forward unit C in the longitudinal direction of the pipe B, but is capable of tilting in a plane perpendicular to the direction of the pipe.

The operation of the coupling unit A' is similar to that of the coupling unit A illustrated in Figure 8 with the main exception that the probe housing 22 and the chassis 14 are capable of tilting laterally to accommodate relative tilt of the hydrant H and the probe 32 and relative longitudinal misalignment between the probe and hydrant is accommodated by the flexible linkages 204 and not, as in the embodiment illustrated in Figure 8, by longitudinal movement of the chassis 14 relative to the forward unit C.

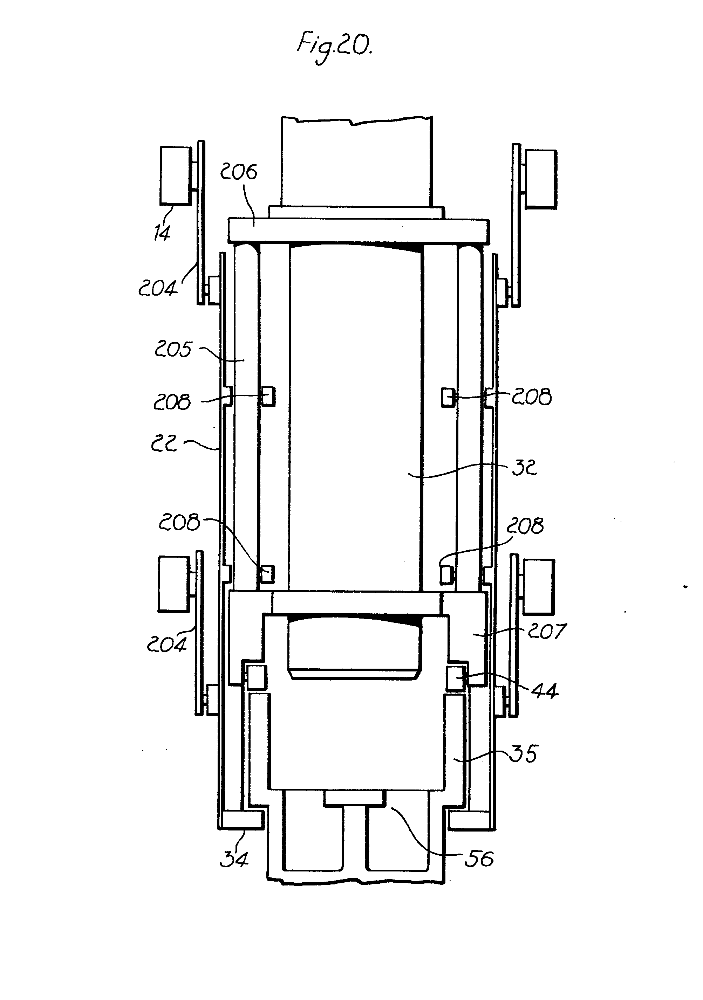

Figure 20 is a schematic view, of a modification of the probe of Figure 10. Two guide rods 205 extend between plates 206, 207 fixed at spaced apart points to the probe 32. The guide rods 205 run in bearing 208 attached to the housing 22.

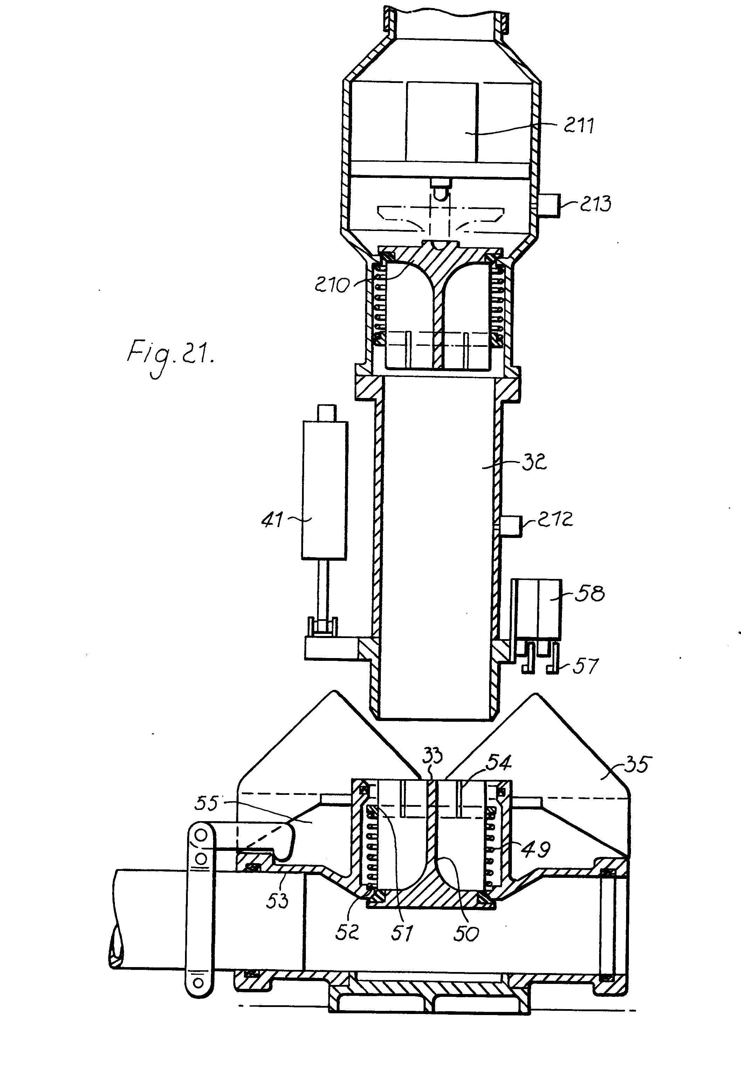

Figure 21 shows a modification of the arrangement shown in Figure 13. In Figure 21 the side plates 35 located on each side of the mouth of the hydrant H to locate the probe 32 laterally and to prevent the probe and hydrant from separating when water flows from the latter to the former are of different shape to those shown in Figure 13. In place of the non-return valve 58 of Figure 13, the probe shown in Figure 21 has a spring loaded non-return valve 210 similar to that in the hydrant H. The valve 210 is controlled by a hydraulic jack 211. On reaching the hydrant H the probe 32 engages the mouth of the hydrant H and moves the valve plate 47 downwardly so that water flows from the hydrant into the probe 32. This, in turn, opens the valve 210. As water pressure builds up in the boom F a pressure switch (not shown) monitors the pressure therein to activate the hydraulic jack 211 which controls the position of the valve 210 so that the predetermined water pressure exists in the boom F.

When the irrigation apparatus is to be moved to the next hydrant, the valve 210 is closed by the hydraulic jack 211. As the valve 210 closes pressure will increase in the pipe B and this is sensed by a pressure switch 212 which is set to operate at a pressure below the maximum design pressure of the pipe B. If the maximum design pressure is exceeded in the pipe B, the hydraulic jack 211 ceases to close the valve 210 until the pressure in the pipe B falls below the maximum design pressure when the hydraulic jack 211 continues to close the valve 210. When the valve 210 is fully closed a pressure switch 213 operates to cause the probe 32 to be withdrawn from the hydrant.

CLAIMS

1. A coupling unit characterised by comprising: a probe (32) arranged to be located within a mouth of a hydrant (H) to receive a supply of liquid from a supply line (B); a chassis (14) on which the probe is mounted; wheeled guide means (12) carried by the chassis for urging the coupling unit (A) to follow the supply line; support means (28) for supporting the chassis; flexible coupling means (24, 26, 30) permitting limited movement of the probe relative to the support means to accommodate misalignment of the probe with the mouth of the hydrant; and a tilting mechanism (60,66) for tilting the probe to correct relative tilt between the probe and the hydrant.

2. A coupling unit as claimed in claim 1 characterised in that the tilting mechanism comprises sensing means (60) for sensing relative tilt between the hydrant and the probe, transmitting means (66) for transmitting the relative tilt to the probe, and means (25) for causing the probe to align with the hydrant to correct for said relative tilt.

3. A coupling unit as claimed in claim 2 characterised in that the transmitting means (66) comprises a mechanical linkage.

4. A coupling unit as claimed in any preceding claim characterised in that the wheeled guide means (12) includes at least one pair of guide wheels between which the supply line is engaged, and a further wheel (10) arranged to run on an upper surface of the supply line.

5. A coupling unit as claimed in any preceding claim characterised in that the support means (28) includes a steering head.

6. A coupling unit as claimed in any preceding claim characterised by including locking means (31) for permitting said limited relative movement of the probe (32) relative to the support means (28) only when the probe is about to be introduced into the mouth of the hydrant (H).

7. A coupling unit as claimed in any preceding claim characterised by comprising drive means (41) for moving the probe (32) towards and away from the mouth of the hydrant (H), the probe carrying roller means (44) arranged to engage ramp surface means (45) on the hydrant when the probe is misaligned with the mouth of the hydrant prior to the probe being located therein, the roller means, as the probe is moved towards the mouth of the hydrant, running over the ramp surface means causing the probe to move relative to support means until the probe is aligned with the mouth of the hydrant.

8. A coupling unit as claimed in any preceding claim characterised in that the probe (32) is connected to the chassis (14) by means of a flexible coupling (204).

9. A coupling unit as claimed in any of claims 1 to 7 characterised in that the probe (32) is fixed to the chassis (14) which is capable of limited movement relative to the support means (28).

10. A coupling unit as claimed in any preceding claim characterised by including flow control means (210,211,212) for varying the flow of liquid through the probe (32) as a function of liquid pressure downstream or upstream of the probe.

11. An irrigation apparatus characterised by having a coupling unit as claimed in any preceding claim.

A
C
E
D
B
F
M
K
J
L
N
P

Fig.1

Q
S
T

Fig.3

H
H
H
H
H
H
H
H
G
H
H
H
H
H
B
H
H
H
H
R
S

Fig. 2

Fig. 4

Q
T
S

Fig.5

Q
S
T

Fig.6

Y
H'
V'
U
V

Fig.7

28
31
30
27
29
17'
13
16
26
14
q
p
r
11
15
10
25
10
60
19
11
18
21
z
17
20
24
23
12
22
B
12

Fig.8

21
20
12
B

Fig.9

36
37
11
38
11
39
43
40
Z'
40'
22
32
37
37
42'
43
43
36
33
35
56
34
H
22
22
38
37
36
39
32
40
36

Fig. 10

Fig. 11

41
32
58
58
42'
57
57
45
45
44
35
35
56
46
H
35
35
55
55
H
B


Fig.12

Fig.14

58
32
35
33
54
55
51
55
50
49
B
53
52
47
48

Fig.13

66
65
62
61
63
64
60
67

Fig.15

101
103
102
100
108
109
104
106
106
104
106
A
104
105
107
110
H
B
107

Fig.16

12/15
A'
C
E
X
D
Y
B
F
M
K
L
J
N
P

Fig. 17.

Fig 18
C
200
199
18 13 16
q
p
C
201
26
204
14
15
11
10
15
10
11
203
204
24
23
203
60
12
22
B
12
31
Fig 19
201
14
202
26

Fig.20.

206
14
204
205
208
208
22
32
208
208
204
207
44
35
34
56

211
213
210
32
41
212
58
57
33
54
35
55
49
53
52
51
50

Fig. 21.

European Patent Office

# EUROPEAN SEARCH REPORT

0008182

Application number

EP 79 301 510.8

| Category | Citation of document with indication, where appropriate, of relevant passages | Relevant to claim | CLASSIFICATION OF THE APPLICATION (Int. Cl.) |
|---|---|---|---|
| | DE - A1 - 2 508 232 (WRIGHT RAIN LTD.) * claims 1 to 10; fig. 1 to 8 * | 1-11 | A 01 G 25/09 |
| | US - A - 3 444 941 (R.J. PURTELL) * claims 1 to 3; fig. 2 to 8 * | 1-7, 9,11 | |
| | DE - A1 - 2 506 220 (M. LAUREAU) * claims 1 to 3; page 16, line 8 to page 21, line 23; fig. 1, 2 * | 1, 3-11 | TECHNICAL FIELDS SEARCHED (Int.Cl.) |
| A | DE - A1 - 2 709 125 (M. LAUREAU) * complete document * | | A 01 G 25/00 |
| A | DE - A1 - 2 521 041 (R. BAUER GMBH) * complete document * | | |
| A | DE - A1 - 2 433 808 (H. R. DI PALMA) * complete document * | | |
| A | DE - A - 2 402 916 (M. LAUREAU) * complete document * | | |
| | ./.. | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 12-10-1979 | SCHLABBACH |

European Patent Office

# EUROPEAN SEARCH REPORT

Application number
EP 79 301 510.8


| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | DE - A - 2 135 363 (C.V. VON LINSOWE et al.) * complete document * | | |
| | -- | | |
| A | US - A - 3 710 818 (J.G. IMESON) * complete document * | | |
| | -- | | |
| A | US - A - 3 599 683 (C.V. VON LINSOWE) * complete document * | | TECHNICAL FIELDS SEARCHED (Int. Cl.3) |
| | -- | | |
| A | US - A - 3 575 200 (J.G. IMESON) * complete document * | | |
| | ---- | | |